# EUROPÄISCHE PATENTSCHRIFT

(11) **EP 2 952 340 B1**
(45) Veröffentlichungstag und Bekanntmachung des Hinweises auf die Patenterteilung: **11.10.2017**
(21) Anmeldenummer: 15168690.4
(22) Anmeldetag: 21.05.2015
(51) Int. Cl.: B31B 50/00, B29C 65/00

(54) **VERFAHREN ZUM HERSTELLEN EINES BECHERS**
METHOD FOR PRODUCING A CONTAINER
PROCÉDÉ DESTINÉ À LA FABRICATION D'UN GOBELET

(30) Priorität: 06.06.2014 DE 102014210960
(43) Veröffentlichungstag der Anmeldung: 09.12.2015
(73) Patentinhaber: Michael Hörauf Maschinenfabrik GmbH u. Co. KG, 73072 Donzdorf (DE)
(72) Erfinder: Messerschmid, Uwe, 73095 Albershausen (DE)
(74) Vertreter: Patentanwälte Ruff, Wilhelm, Beier, Dauster & Partner mbB

(56) Entgegenhaltungen:
- EP-A1- 0 108 264
- EP-A1- 2 080 715
- FR-A1- 2 006 077
- FR-A1- 2 330 533
- US-A- 1 876 931
- US-A- 2 216 331
- US-A- 3 063 347
- US-A- 4 100 842
- US-A- 4 374 697

## Beschreibung

Die Erfindung betrifft ein Verfahren zum Herstellen eines Bechers aus einem flächigen Segment und einem topfförmigen Boden sowie eine Vorrichtung zum Herstellen eines solchen Bechers.

Aus der US-Patentschrift US 2,216,331 sind ein Verfahren und eine Vorrichtung zum Herstellen eines Bechers aus einem flächigen Segment und einem topfförmigen Boden bekannt. Das flächige Segment wird auf einem Wickeldorn gewickelt, so dass im Bereich der Seitenkanten des Segments eine Überlappung vorliegt. Die an die Seitenkanten anschließenden Abschnitte werden im Bereich der Überlappung verbunden, so dass eine konische Hülse entsteht. Daraufhin wird ein topfförmiger Boden in die konische Hülse eingesetzt und der topfförmige Boden wird mit der Innenseite der Hülse im Wesentlichen flüssigkeitsdicht verbunden.

Eine ähnliche Vorrichtung und ein ähnliches Verfahren zum Herstellen eines Bechers aus einem flächigen Segment sind aus der US-Patentschrift US 4,100,842 bekannt. Auch dort wird ein flächiges Segment über einem Wickeldorn zu einer konischen Hülse gewickelt und nachfolgend wird ein topfförmiger Boden in die Hülse eingesetzt.

In der europäischen Offenlegungsschrift EP 0 108 264 A1 ist das Ausformen einer Zarge zum flüssigkeitsdichten Verbinden der umlaufenden Wandung des topfförmigen Bodens mit einer Unterkante der Hülse bekannt.

Aus der französischen Offenlegungsschrift FR 2 006 077 sind ein weiteres Verfahren und eine weitere Vorrichtung zum Herstellen eines Bechers aus einem flächigen Segment und einem topfförmigen Boden bekannt.

Die US-Patentschrift US 3,063,347 beschreibt ein Verfahren und eine Vorrichtung zum Herstellen eines Bechers aus einem flächigen Segment und einem topfförmigen Boden, wobei eine erste Seitenkante des flächigen Segments in eine Stufe am Umfang eines Wickeldorns eingelegt und dort dann festgehalten wird. Nachfolgend wird das flächige Segment um den Wickeldorn gewickelt, dessen Außenumfang mit Ausnahme der Stufe zum Einlegen der ersten Seitenkante einer Kreislinie folgt. Auch während des Wickelvorgangs liegt immer nur ein Teil der Fläche des Segments, die an die Überlappung angrenzt, auf den Wickeldorn auf. Sobald die Überlappung hergestellt ist, werden die an die Seitenkanten anschließenden Bereiche im Bereich der Überlappung zusammengepresst und miteinander verbunden.

Die US-Patentschrift US 4,374,697 beschreibt eine Vorrichtung zum Ultraschallverschweißen des flächigen Segments eines Bechers im Bereich der Überlappung. Die Vorrichtung weist einen mit Ultraschall beaufschlagten Stempel auf, der in einem auf den Wickeldorn aufgesetzten Zustand im Mittenbereich weiter vom Wickeldorn beabstandet ist als in seinen Endbereichen. Eine Stufe zwischen dem Mittenbereich und dem jeweiligen Endbereich soll 0,02 mm betragen.

Mit der Erfindung sollen ein Verfahren und eine Vorrichtung zum Herstellen eines Bechers verbessert werden.

Erfindungsgemäß ist hierzu ein Verfahren mit den Merkmalen von Anspruch 1 bzw. eine Vorrichtung mit den Merkmalen von Anspruch 10 vorgesehen. Vorteilhafte Weiterbildungen der Erfindung sind in den Unteransprüchen angegeben.

Erfindungsgemäß ist bei einem Verfahren zum Herstellen eines Bechers aus einem flächigen Segment und einem topfförmigen Boden das Wickeln des flächigen Segments auf einen Wickeldorn, so dass im Bereich der Seitenkanten des Segments eine Überlappung vorliegt, das Verbinden der an die Seitenkanten anschließenden Abschnitte im Bereich der Überlappung, so dass eine konische Hülse entsteht, das Einsetzen des topfförmigen Bodens in die konische Hülse und das im Wesentlichen flüssigkeitsdichte Verbinden einer umlaufenden Wandung des topfförmigen Bodens mit einer Innenseite der Hülse vorgesehen.

Das erfindungsgemäße Verfahren ist für Papiermaterial und papierähnlich zu verarbeitende Materialien vorgesehen. Beispielsweise kann Papier, Karton oder Pappe in flächigen Segmenten vorliegen und diese flächigen Segmente können dann einerseits zu einer konischen Hülse gewickelt und andererseits zu einem topfförmigen Boden verformt werden. Zweckmäßigerweise ist das Papiermaterial flüssigkeitsdicht beschichtet. In gleicher Weise oder zumindest ähnlicher Weise wie Papiermaterial werden auch flächig vorliegende Kunststoffmaterialien zu Bechern verarbeitet. Flächige Kunststoffmaterialien sind beispielsweise auch Kunststofflaminate. Dabei wird das flächige Kunststoffmaterial, das in Segmentform vorliegt, ebenfalls um einen Wickeldorn gewickelt und im Bereich der Überlappung verbunden, um eine konische Hülse zu formen. Auch ein topfförmiger Boden kann aus dem flächigen Kunststoffmaterial geformt werden, indem ein kreisförmiger Zuschnitt in seinem Randbereich gegenüber einer Bodenfläche etwa senkrecht nach oben geklappt wird. Die Probleme, die bei papierähnlich zu verarbeitendem Kunststoffmaterial auftreten, sind dabei im Wesentlichen die gleichen, die beim Verarbeiten von Papiermaterial auftreten. Die vorliegende Erfindung kann für papierähnlich zu verarbeitende Kunststoffmaterialien eingesetzt werden, sie ist aber nicht speziell für papierähnlich zu verarbeitende Kunststoffmaterialien ausgebildet, sondern kann vielmehr mit erheblichen Vorteilen auch für Papiermaterial eingesetzt werden, speziell wenn das Papiermaterial beispielsweise aus einer sehr steifen und/oder dicken Pappe besteht.

In Weiterbildung der Erfindung wird beim Verbinden der an die Seitenkanten anschließenden Abschnitte im Bereich der Überlappung ein Pressdruck ausgeübt, wobei der Pressdruck in den Bereichen, die sich unmittelbar an die Unterkante der Hülse und die Oberkante der Hülse anschließen, größer ist als in den übrigen Bereichen der Überlappung.

Erfindungsgemäß ist also vorgesehen, im Bereich der Unterkante und der Oberkante der Hülse das Papiermaterial oder papierähnlich zu verarbeitende Material stärker zusammenzudrücken als im Mittenbereich. Gerade bei vergleichsweise dicken Materialien wird dadurch das nachfolgende Umformen der Unterkante und der Oberkante der Hülse zu einer Mundrolle bzw. einer Zarge erheblich erleichtert.

In Weiterbildung der Erfindung ist die Länge des Bereichs, der sich unmittelbar an die Unterkante der konischen Hülse anschließt, so groß gewählt, dass der Bereich sich am fertiggestellten Becher wenigstens über die Außenseite und Innenseite einer Zarge erstreckt, mit der der Boden und die Hülse im Wesentlichen flüssigkeitsdicht verbunden sind.

Zum Herstellen einer Zarge wird in der Regel die Hülse um 180° nach innen umgeschlagen und die Wandung des topfförmigen Bodens wird in diesem Umschlag aufgenommen. Zum flüssigkeitsdichten Verbinden werden dann Hülse und Boden im Bereich der Zarge verpresst und/oder stoffschlüssig verbunden. Wenn der Bereich der Überlappung an der Unterkante der Hülse stärker verpresst wird als im Mittenbereich und somit die Überlappung im Bereich der späteren Zarge flacher ist als im Mittenbereich, ist die Herstellung der Zarge erheblich erleichtert.

In Weiterbildung der Erfindung wird die Länge des Bereichs, der sich unmittelbar an die Oberkante der konischen Hülse anschließt, so groß gewählt, dass der Bereich sich am fertiggestellten Becher wenigstens über die Mundrolle erstreckt.

Im Bereich der Mundrolle erleichtert die gegenüber dem Mittenbereich stärker flachgepresste Überlappung das Herstellen der Mundrolle erheblich. An und für sich könnte natürlich der vollständige Bereich der Überlappung stark zusammengepresst werden. Die hierfür erforderlichen Pressdrücke sind aber so hoch, dass sie eine erhebliche Verstärkung der für die Herstellung von Bechern aus Papiermaterial und papierähnlich zu verarbeitendem Material verwendeten Vorrichtung oder Maschine erfordern würden. Durch das stärkere Pressen der Überlappung lediglich im Bereich der Oberkante und Unterkante der Hülse können dadurch auch sehr dicke Papiermaterialien oder papierähnlich zu verarbeitende Kunststoffmaterialien problemlos verarbeitet werden, ohne große Veränderungen an der Maschine selbst zu erfordern.

Gemäß der Erfindung wird das flächige Segment zum Herstellen der konischen Hülse auf einen Wickeldorn aufgewickelt, dessen Querschnitt von einer Kreisform abweicht und entweder oval, elliptisch oder im Bereich der Überlappung der Segmentkanten abgeplattet ist.

Bei sehr steifen Papiermaterialien oder papierähnlich zu verarbeitenden Kunststoffmaterialien kommt es bei Verwendung eines Wickeldorns mit kreisrundem Querschnitt nach dem Abziehen der Hülse vom Wickeldorn zu einer Verformung der Hülse in eine Querschnittsform, die von der Kreisform abweicht. Dies ist durch die doppelte Materiallage im Bereich der Überlappung verursacht. Selbst dann, wenn der Bereich der Überlappung durch Temperatureinwirkung versiegelt wird, wird die kreisrunde Form nach dem Abstreifen vom Wickeldorn nicht beibehalten. Abhilfe kann hier in überraschend einfacher Weise ein Wickeldorn mit nicht kreisförmigem Querschnitt schaffen. Beispielsweise kann der Wickeldorn oval oder elliptisch ausgebildet sein, wobei der Bereich der Überlappung dann auf einem ebenen Abschnitt des Wickeldorns oder einem Abschnitt des Wickeldorns mit größerem Krümmungsradius angeordnet wird. Alternativ kann der Wickeldorn lediglich im Bereich der Überlappung von der Kreisform abweichen und im Bereich der Überlappung abgeplattet sein. Auch bei sehr steifem Papiermaterial und sehr steifem papierähnlich zu verarbeitendem Kunststoffmaterial nimmt die Hülse nach dem Abstreifen vom Wickeldorn dann eine Form mit kreisförmigem Querschnitt ein.

In Weiterbildung der Erfindung wird zum Ausüben des Pressdrucks ein Pressstempel verwendet, der im Mittenbereich weiter vom Wickeldorn beabstandet ist als in seinen beiden Endbereichen.

Mit einem solchen Pressstempel lässt sich der im Bereich der Unterkante und der Oberkante der Hülse größere Pressdruck auf einfache Weise verwirklichen.

In Weiterbildung der Erfindung ist das Umschlagen eines unteren Randes der Hülse, der über die untere Kante der Umfangswandung des Bodens hinausragt, mittels mehrerer, in radialer Richtung verschiebbarer Backen nach innen vorgesehen, bis der untere Rand zur Mittellängsachse der Hülse eine vordefinierte erste Winkelposition einnimmt.

Gerade sehr steifes Papiermaterial oder sehr steifes flächiges Kunststoffmaterial kann durch diese Maßnahmen am unteren Rand der Hülse sehr präzise und zuverlässig umgeschlagen werden. Im Gegensatz zu üblichen Verfahren bei der Becherherstellung, bei denen der Umschlag des unteren Randes der Hülse durch die Zustellung eines Stempels parallel zur Mittellängsachse der Hülse erfolgt, wird durch die erfindungsgemäß vorgesehenen radial verschiebbaren Backen ein Ausknicken des unteren Randes der Hülse beim Umschlagen zuverlässig verhindert. Das Umschlagen des unteres Randes, dass einen Teilschritt der Herstellung der unteren, umlaufenden Zarge zur Verbindung von Hülse und Boden bildet, kann damit mit sehr kurzen Taktzeiten und in prozesssicherer Weise erfolgen.

In Weiterbildung der Erfindung wird ausgehend von der ersten Winkelposition der untere Rand der Hülse mittels eines parallel zur Mittellängsachse der Hülse bewegbaren Stempels in eine zweite vordefinierte Winkelposition umgeschlagen.

Nachdem der untere Rand durch die radial nach innen verschiebbaren Backen in die vordefinierte erste Winkelposition gebracht ist, in der der untere Rand beispielsweise einen Winkel zwischen 50° und 60° zur Mittellängsachse einnimmt, besteht die Gefahr des Ausknickens beim weiteren Umschlagen des Randes nicht mehr und der weitere Umschlag des Randes, beispielsweise bis in eine zweite Winkelposition, in der der Rand einen Winkel von etwa 180° zur Mittellängsachse einnimmt, kann in bewährter Weise mittels eines parallel zur Mittellängsachse zustellbaren Stempels erfolgen.

Bei der Erfindung ist das Einbringen einer ersten rillenförmigen Vertiefung in das flächige Segment oder in die konische Hülse, wobei die erste rillenförmige Vertiefung in einem konstanten Abstand zu einer kürzeren Unterkante des Segments bzw. einer Unterkante der Hülse verläuft, und das Umschlagen der Hülse um die erste rillenförmige Vertiefung zur Bildung einer Zarge mit der umlaufenden Wandung des topfförmigen Bodens vorgesehen, so dass ein Bereich um die erste rillenförmige Vertiefung im vollständig umgeschlagenen Zustand der Hülse eine Standfläche des Bechers bildet.

Gerade bei sehr dickem und dadurch steifem Papiermaterial ist das Vorprägen des Bereichs, in dem später die Zarge ausgeformt wird, von großem Vorteil. Das Vorprägen des Materials kann dabei entweder am flächigen Segment oder erst an der fertiggestellten Hülse erfolgen.

Bei der Erfindung ist das Einprägen von mehreren zweiten, rillenförmigen Vertiefungen vorgesehen, die nebeneinander liegen und die sich von der ersten rillenförmigen Vertiefung aus bis zur Unterkante des Segments oder der Unterkante der Hülse erstrecken.

In Weiterbildung der Erfindung ist das Anwärmen des Materials der Hülse im Bereich der Oberkante der Hülse und das anschließende Formen der Mundrolle vorgesehen.

Auf diese Weise kann gerade bei sehr steifem Papiermaterial oder papierähnlich zu verarbeitendem Kunststoffmaterial das Formen der Mundrolle erleichtert werden. Überraschenderweise ist auch bei Papiermaterial das Anwärmen des Materials vor dem Formen der Mundrolle hilfreich. Es muss selbstverständlich darauf geachtet werden, dass das Papiermaterial dabei nicht Feuer fängt.

In Weiterbildung der Erfindung sind das Auftragen von Gleitmittel im Bereich der Oberkante der Hülse und das anschließende Formen der Mundrolle vorgesehen.

Das der Erfindung zugrundeliegende Problem wird auch durch eine Vorrichtung zum Herstellen eines Bechers mit einem sich einseitig verjüngenden Wickeldorn gelöst, bei dem ein Querschnitt des Wickeldorns von einer Kreisform abweicht und entweder oval, elliptisch oder im Bereich der Überlappung der Segmentkanten abgeplattet ist.

Überraschenderweise kann durch einen solchen, von einer Kreisform abweichenden Wickeldorn bei sehr steifem Papiermaterial oder sehr steifem papierähnlich zu verarbeitendem Kunststoffmaterial eine kreisförmige Hülse hergestellt werden. Durch die Überlappung bei der Herstellung der Hülse ist die Hülse im Bereich der Überlappung deutlich steifer, da dort die doppelte Materialdicke vorliegt. Durch einen ovalen oder im Bereich der Überlappung der Segmentkanten abgeplatteten Wickeldorn verformt sich die Hülse beim Abziehen vom Wickeldorn so, dass sie eine im Querschnitt kreisrunde Form erhält.

In Weiterbildung der Erfindung sind bei der Vorrichtung zum Herstellen eines Bechers ein Wickeldorn und ein Pressstempel vorgesehen, wobei der Pressstempel sich entlang einer Mantellinie des Wickeldorns erstreckt und wobei der Pressstempel in einem, auf den Wickeldorn aufgesetzten Zustand, in seinem Mittenbereich weiter vom Wickeldorn beabstandet ist als in seinen beiden Endbereichen.

Durch einen solchen Pressstempel kann der Bereich der Überlappung an der Unterkante und Oberkante der Hülse auf einfache Weise stärker gepresst werden, wodurch im Bereich der Oberkante und Unterkante der Hülse die Wandungsdicke der Hülse an der Überlappung verringert wird. Dies erleichtert das nachfolgende Ausformen einer Mundrolle an der Oberkante der Hülse bzw. einer Zarge an der Unterkante der Hülse erheblich.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, in den Zeichnungen dargestellten Ausführungsformen lassen sich dabei in beliebiger Weise kombinieren, ohne den Rahmen der Erfindung zu überschreiten. In den Zeichnungen zeigen:
- Fig. 1: eine schematische Schnittansicht einer Vorrichtung zum Herstellen eines Bechers beim Ausführen eines ersten Verfahrensschritts,
- Fig. 2: die vergrößerte Einzelheit II aus Fig. 1,
- Fig. 3: die Vorrichtung zum Herstellen eines Bechers beim Ausführen eines zweiten Verfahrensschritts,
- Fig. 4: die vergrößerte Einzelheit IV der Fig. 3,
- Fig. 5: die erfindungsgemäße Vorrichtung zum Herstellen eines Bechers beim Ausführen eines dritten Verfahrensschritts,
- Fig. 6: die Einzelheit VI aus Fig. 5,
- Fig. 7: eine Ansicht eines Wickeldorns der erfindungsgemäßen Vorrichtung von schräg oben,
- Fig. 8: den Wickeldorn der Fig. 7 in einer Ansicht von vorne,
- Fig. 9: den Wickeldorn der Fig. 7 und 8 mit aufgesetztem Pressstempel und aufgeschobener Hülse,
- Fig. 10: eine mit dem Wickeldorn der Fig. 7 hergestellte Hülse nach dem Abziehen vom Wickeldorn,
- Fig. 11: eine Vorderansicht der Hülse der Fig. 10,
- Fig. 12: eine schematische Darstellung des Wickeldorns der Fig. 9 von schräg oben,
- Fig. 13: den Wickeldorn der Fig. 12 in einer Vorderansicht,
- Fig. 14: den Wickeldorn der Fig. 12 in einem Längsschnitt,
- Fig. 15: die vergrößerte Einzelheit XV aus Fig. 14,
- Fig. 16: die Vorrichtung zum Herstellen eines Bechers beim Ausführen eines weiteren Verfahrensschritts,
- Fig. 17: die vergrößerte Darstellung der Einzelheit XVII aus Fig. 16,
- Fig. 18: die Vorrichtung zur Herstellung eines Bechers beim Ausführen eines weiteren Verfahrensschritts,
- Fig. 19: die vergrößerte Einzelheit XIX der Fig. 18,
- Fig. 20: die Vorrichtung zur Herstellung eines Bechers beim Ausführen eines weiteren Verfahrensschritts,
- Fig. 21: eine vergrößerte Darstellung der Einzelheit XXI der Fig. 20,
- Fig. 22: die Vorrichtung zum Herstellen eines Bechers beim Ausführen eines weiteren Verfahrensschritts,
- Fig. 23: die vergrößerte Einzelheit XXIII aus Fig. 22,
- Fig. 24: die Vorrichtung zum Herstellen eines Bechers beim Ausführen eines weiteren Verfahrensschritts,
- Fig. 25: die vergrößerte Einzelheit XXV der Fig. 24,
- Fig. 26: die Vorrichtung zum Herstellen eines Bechers beim Ausführen eines weiteren Verfahrensschritts,
- Fig. 27: die vergrößerte Einzelheit XXVII aus Fig. 26,
- Fig. 28: eine Vorderansicht eines Wickeldorns der erfindungsgemäßen Vorrichtung gemäß einer weiteren Ausführungsform,
- Fig. 29: den Wickeldorn der Fig. 28 von schräg oben,
- Fig. 30: eine Vorderansicht eines Wickeldorns der erfindungsgemäßen Vorrichtung gemäß einer weiteren Ausführungsform und
- Fig. 31: den Wickeldorn der Fig. 30 von schräg oben.

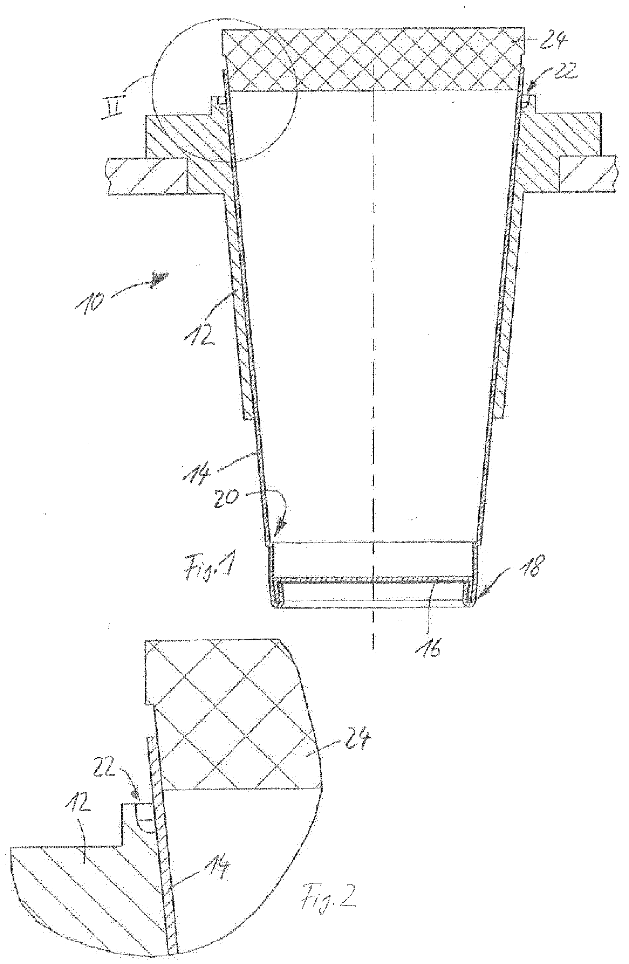

Die Darstellung der Fig. 1 zeigt eine Vorrichtung 10 zum Herstellen eines Bechers, wobei lediglich ein kleiner Ausschnitt der Vorrichtung dargestellt ist. Die Vorrichtung 10 weist eine konische Aufnahme 12 auf, wobei beispielsweise mehrere konische Aufnahmen 12 am Umfang eines Sternrads angeordnet sein können. In der konischen Aufnahme 12 ist eine ebenfalls konische Hülse 14 aufgenommen, die bereits mit einem topfförmigen Boden 16 im Bereich einer Zarge 18 im Wesentlichen flüssigkeitsdicht verbunden ist. Zur Bildung der Zarge 18 wird ein sich an die Unterkante der Hülse 12 anschließender Bereich um 180° umgeschlagen und in den Umschlag wird eine Wandung des topfförmigen Bodens 16 aufgenommen. Der Bereich der Zarge 18 wird dann noch verpresst, um eine im Wesentlichen flüssigkeitsdichte Verbindung zwischen Boden 16 und Hülse 14 herzustellen. Darüber hinaus ist die Hülse 14 noch mit einer umlaufenden Stapelschulter 20 versehen. Auf der umlaufenden Stapelschulter 20 kann ein weiterer, gleichartiger Becher abgestapelt werden, um ein Verklemmen mehrerer ineinandergestapelter Becher zu vermeiden.

Die Aufnahme 12 weist an ihrem oberen Rand eine ringförmige Vertiefung 22 auf, die später zum Ausformen einer Mundrolle an der Oberkante der Hülse 14 dient. Bei dem in Fig. 1 dargestellten Verfahrensschritt wird ein Stempel 24 in die in Fig. 1 oben liegende große Öffnung der Hülse 14 eingesetzt, um den die obere Öffnung der Hülse 14 umgebenden Bereich für die Ausformung der Mundrolle vorzubereiten. Durch den Stempel 24 wird sichergestellt, dass die Oberkante der Hülse 14 im Wesentlichen kreisrund verläuft und in einem anschließenden Verfahrensschritt zu einer Mundrolle umgeformt werden kann. Der Stempel 24 besteht aus porösem Material, beispielsweise Filz, und dient auch dazu, die Innenseite des oberen Randes der Hülse 14 mit Gleitmittel zu beschichten.

In Fig. 2 ist die Einzelheit II der Fig. 1 in vergrößerter Darstellung zu erkennen.

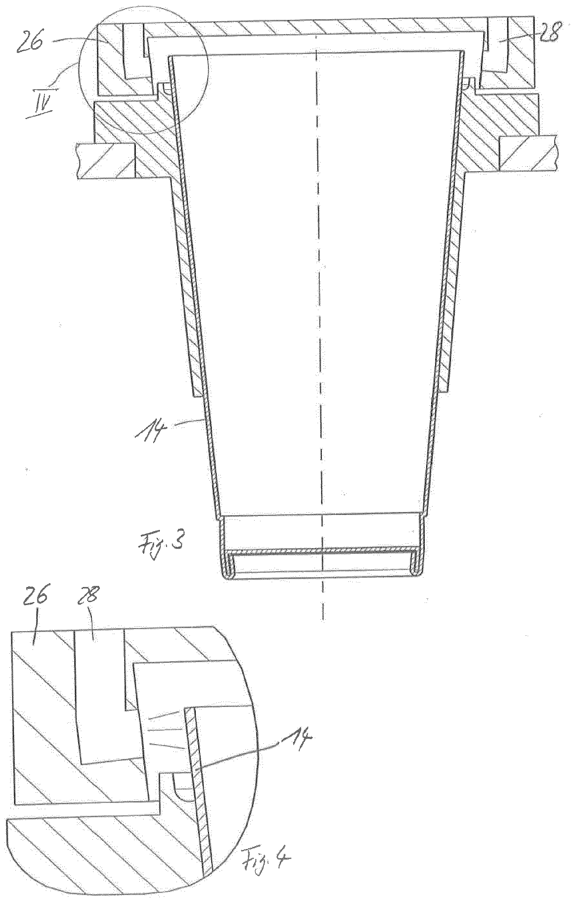

Die Darstellung der Fig. 3 zeigt einen sich an den in Fig. 1 dargestellten Verfahrensschritt anschließenden Verfahrensschritt. Hierbei wird mittels einer Haube 26, die mit Kanälen 28 versehen ist, erwärmte Luft gegen den sich an die Oberkante der Hülse 14 anschließenden Bereich geblasen. Die Haube 26 umgibt dabei die Oberkante der Hülse 14 und stellt sicher, dass die erwärmte Luft nicht nach oben entweichen kann. Die erwärmte Luft wird, siehe Fig. 4, dabei durch die Kanäle 28 von außen gegen die Hülse 14 geblasen. Zusätzlich kann, entweder vor oder nach dem Erwärmen des Bereichs der Oberkante der Hülse 14, auf diesen Bereich ein Gleitmittel aufgetragen werden, um das nachfolgende Ausformen der Mundrolle zu erleichtern.

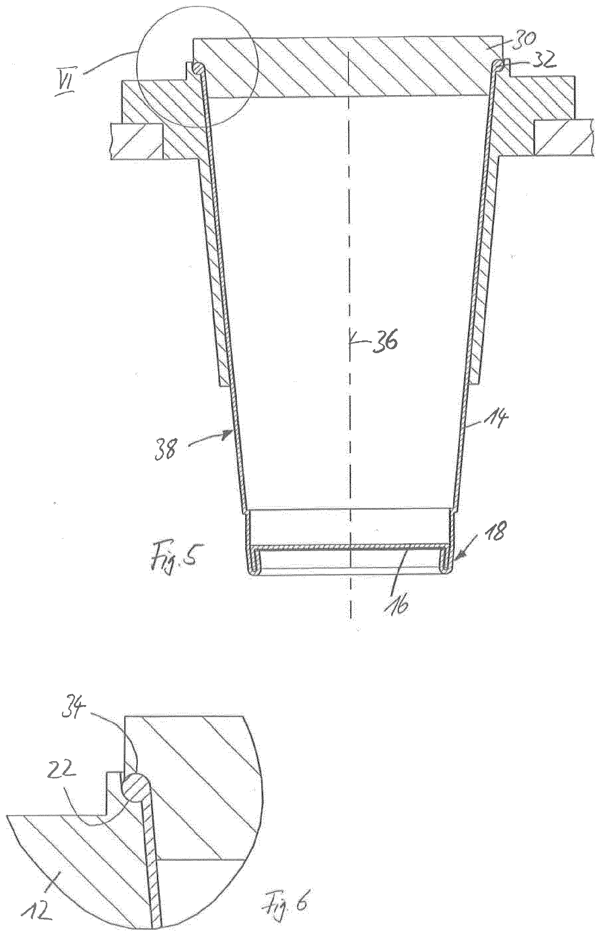

Die Darstellung der Fig. 5 zeigt die erfindungsgemäße Vorrichtung zum Herstellen eines Bechers, nachdem ein Stempel 30 zum Ausformen einer Mundrolle 32 auf die Hülse 14 aufgesetzt wurde. Das Aufsetzen des Stempels 30 verursacht, dass sich die Oberkante der Hülse 14 nach außen umlegt und um etwa 270° bis 360° einrollt. Der Stempel 30 weist hierzu, siehe Fig. 6, eine kreisförmige, nach unten offene Nut 34 auf. Zusammen mit der Nut 22 in der Aufnahme 12 bildet die Nut 34 dadurch eine am Querschnitt etwa kreisförmige Ausnehmung, die beim Zustellen des Stempels 30 in Richtung auf den Boden 16 zu einer Einrollung der Oberkante der Hülse 14 und dadurch zur Bildung der Mundrolle 32 führt. Der Stempel 30 kann zum Ausformen der Mundrolle 32 lediglich axial zugestellt werden oder auch zusätzlich um die Mittellängsachse 36 der Hülse 14 rotieren.

Nach Abschluss des in Fig. 5 dargestellten Verfahrensschritts ist aus der Hülse 14 und dem Boden 16 ein vollständiger Becher 38 entstanden. Der Becher 38 kann, je nach Erfordernis, nun noch mit einem Außenmantel und/oder einer Isolierschicht versehen werden, um auch für Heißgetränke geeignet zu sein.

Die beschriebenen Schritte zur Herstellung der Mundrolle ermöglichen das Herstellen einer Mundrolle auch bei sehr steifem und/oder dickem Papiermaterial sowie auch bei sehr steifem und/oder dickem papierähnlich zu verarbeitenden Kunststoffmaterial.

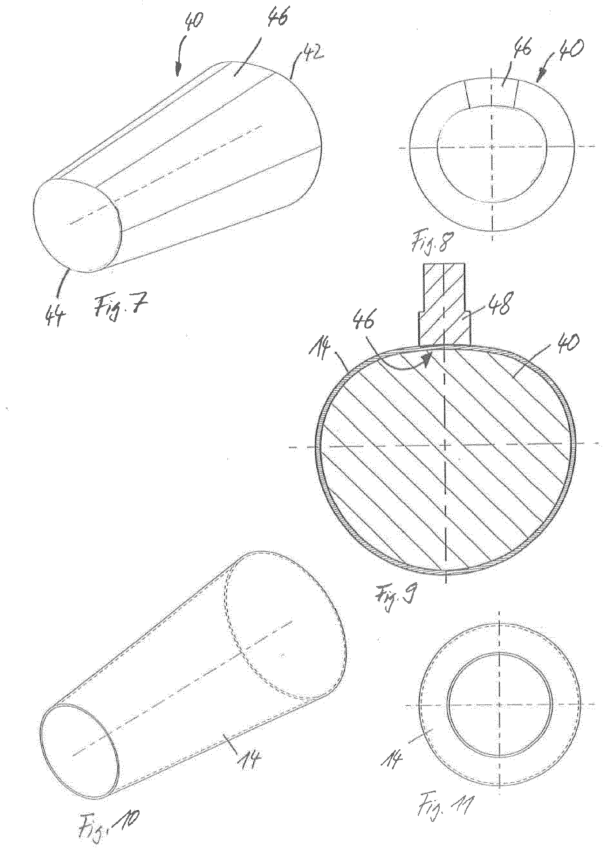

Die Darstellung der Fig. 7 zeigt einen Wickeldorn 40 in schematischer Darstellung von schräg oben. Der Wickeldorn 40 weist ein Ende 42 mit größerem Durchmesser und ein Ende 44 mit kleinerem Durchmesser auf. Der Wickeldorn 40 ist zum Herstellen einer konischen Hülse aus einem flächigen Materialsegment vorgesehen. Das flächige Materialsegment wird dabei um den Wickeldorn 40 gelegt und die Längskanten des flächigen Segments werden in einem Bereich 46 des Wickeldorns 40 übereinandergelegt. Nachdem der Bereich der Überlappung dann miteinander verbunden wurde, entsteht eine konische Hülse. Wie in Fig. 7 zu erkennen ist, weicht eine Querschnittsform des Wickeldorns 40 von der Kreisform ab. Speziell ist der Bereich 46, auf dem die Überlappung der Segmentkanten des flächigen Segments angeordnet wird, abgeplattet ausgeführt. Dies ist auch in der Darstellung der Fig. 8, einer Vorderansicht des Wickeldorns 40, gut zu erkennen. Der Wickeldorn 40 weist im Bereich 46 der späteren Überlappung der Segmentkanten eine Abplattung auf, um auch bei sehr steifem Papiermaterial oder sehr steifem papierähnlich zu verarbeitenden Kunststoffmaterial die Herstellung einer konischen Hülse mit kreisförmigem Querschnitt zu ermöglichen, wie sie in den Fig. 10 und 11 dargestellt ist. Da im Bereich der Überlappung die doppelte Materialstärke vorliegt, verhält sich dieser Bereich der Hülse 14 nach dem Abziehen vom Wickeldorn 40 anders als der übrige Bereich, in dem lediglich die einfache Materialstärke vorliegt. Es wurde festgestellt, dass eine Abplattung im Bereich 46 des Wickeldorns 40 nach dem Abziehen der Hülse 14 vom Wickeldorn 40 eine konische Form mit kreisförmigem Querschnitt der Hülse 14 entstehen lässt.

Alternativ zu der in den Fig. 7 und 8 dargestellten Form des Wickeldorns kann der Wickeldorn auch mit ovaler oder elliptischer Querschnittsform ausgebildet sein, wobei die Überlappung der Segmentkanten dann in einem ebenen Bereich des Ovals oder einem Bereich der Ellipse mit größerem Durchmesser angeordnet wird.

Die Darstellung der Fig. 9 zeigt den Wickeldorn 40 mit der aufgelegten Hülse 14 und einem Presstempel 48 in schematischer Darstellung. Der Pressstempel 48 ist gegenüber dem Bereich 46 des Wickeldorns 40 angeordnet, in dem die Überlappung der Segmentkanten zu liegen kommt.

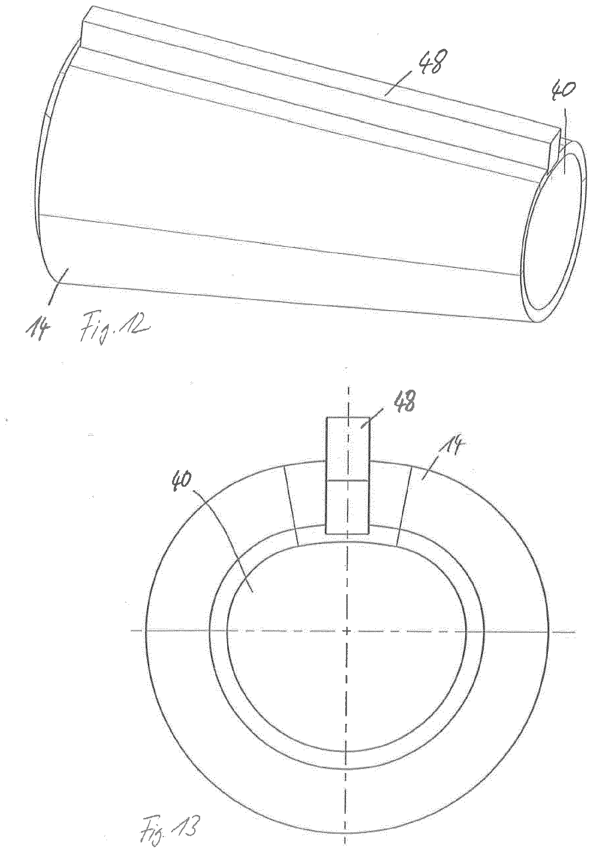

Die Darstellung der Fig. 12 zeigt eine Ansicht des Wickeldorns 40 mit der aufgelegten Hülse 14 und dem Pressstempel 48 von schräg oben.

Fig. 13 zeigt den Wickeldorn 40 mit dem Pressstempel 48 und der Hülse 14 von vorne.

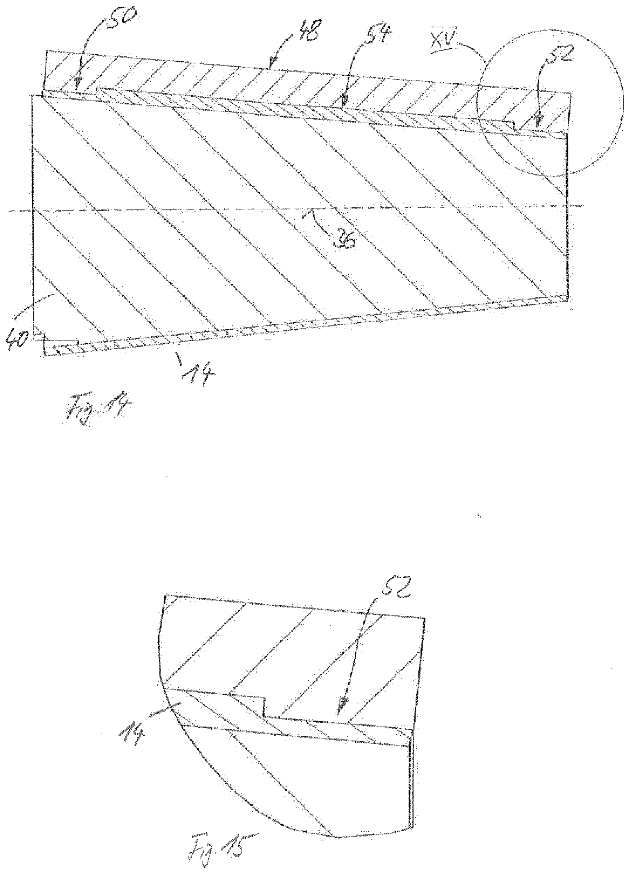

Fig. 14 zeigt eine Ansicht auf eine Schnittebene durch die Mittellängsachse 36 des Wickeldorns 40 und der Hülse 14 aus Fig. 12. Es ist Fig. 14 zu entnehmen, dass der Pressstempel 48, der sich entlang einer Mantellinie des Wickeldorns 40 erstreckt, in einem Bereich 50, der einen sich an die Oberkante der Hülse 14 anschließenden Bereich der Hülse 14 zusammendrückt, und in einem Bereich 52, der einen sich an die Unterkante der Hülse 14 anschließenden Bereich der Überlappung zusammendrückt, einen geringeren Abstand zur Oberfläche des Wickeldorns 40 aufweist als in seinem Mittenbereich 54. Der Mittenbereich 54 ist also gegenüber den Bereichen 50, 52 ausgenommen. Beim Aufsetzen des Pressstempels 48 auf die Hülse 14 wird somit in den Bereichen 50, 52 ein deutlich größerer Pressdruck auf die Hülse 14 ausgeübt als im Mittenbereich 54. Das Material der Hülse 14 zwischen den Bereichen 50, 52 des Pressstempels und dem Wickeldorn 40 wird dadurch deutlich stärker zusammengepresst, als der zwischen dem Mittenbereich 54 und dem Pressstempel 40 liegende Bereich. Die Bereiche 50, 52 verformen dabei einen Bereich der Überlappung, in dem am fertiggestellten Becher, siehe Fig. 5, später die Zarge 18 und die Mundrolle 32 ausgeformt werden. Wie Fig. 14 und auch der vergrößerten Darstellung in Fig. 15 zu entnehmen ist, wird die Hülse 14 dabei in den Bereichen 50, 52 etwa auf die Hälfte der Materialstärke zusammengedrückt, die im Mittenbereich 54 vorliegt. Da Fig. 14 einen Längsschnitt durch den Bereich der Überlappung der Segmentkanten der Hülse 14 zeigt, erhält der Bereich der Überlappung durch den Pressstempel 48 anschließend an die Oberkante bzw. Unterkante der Hülse 14 dadurch eine Materialstärke, die nur wenig von der Materialstärke am übrigen Umfang der Hülse 14 abweicht und sich dadurch zuverlässig und prozesssicher zu einer Mundrolle 32 bzw. einer Zarge 18 umformen lässt. Die schematische Darstellung der Fig. 14 gibt diese Dickenverhältnisse nicht wieder und dient lediglich der Erläuterung des Funktionsprinzips.

Da lediglich die beiden Bereiche 50, 52 stärker zusammengedrückt werden, steigt die erforderliche Presskraft nicht zu stark an. Die Bereiche 50, 52 haben dabei eine Länge, die jeweils lediglich etwa 10% der Gesamtlänge des Pressstempels 48 entsprechen. Dadurch wird die Kraft, die auf den Pressstempel 48 ausgeübt werden muss, zwar größer als bei konventionellen Pressstempeln, dennoch muss aber die Vorrichtung zur Herstellung des Bechers nicht auf übermäßig große Pressdrücke ausgelegt werden, die erforderlich wären, wenn sich die Bereiche 50, 52 über die gesamte Länge des Pressstempels oder über einen größeren Bereich als in Fig. 14 dargestellt erstrecken würden.

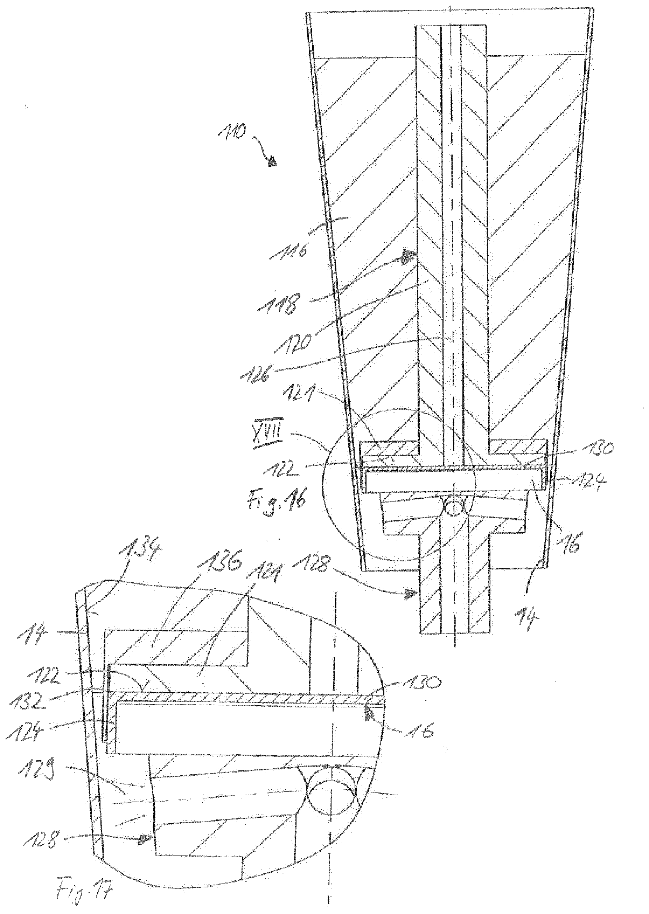

Die Darstellungen der Fig. 16 bis 27 beschreiben das Einsetzen des topfförmigen Bodens 16 in die konische Hülse 14 sowie das Umschlagen des unteren Rands der Hülse 14 und das anschließende Ausformen der Zarge 18.

Fig. 16 zeigt eine schematische Schnittansicht einer Vorrichtung 110 zum Herstellen eines Bechers aus einer konischen Hülse 14 und einem topfförmigen Boden 16. Die Vorrichtung 110 kann Teil einer größeren, nicht dargestellten Maschine sein und beispielsweise können mehrere der Vorrichtungen 110 auf einem Sternrad angeordnet sein.

Die Hülse 14 ist durch Wickeln und Verkleben bzw. Versiegeln im Bereich einer nicht dargestellten Überlappung aus einem flächigen Segment hergestellt worden. Der topfförmige Boden 16 ist ebenfalls aus einem flächigen Segment hergestellt worden. Die Hülse 14 ist auf einem ebenfalls konischen Dorn 116 angeordnet, der eine zentrale Führungsbohrung aufweist, in der ein Stempel 118 zum Halten des Bodens 16 geführt ist. Der Stempel 118 weist eine Betätigungsstange 120 und eine Stempelplatte 121 mit einer Stempelfläche 122 auf. Die Stempelfläche 122 liegt an einer in Fig. 1 obenliegenden Bodenfläche 130 des Bodens 16 an. Diese obenliegende Bodenfläche 130 des Bodens 16 definiert am fertiggestellten Becher eine untere Begrenzung des mit Flüssigkeit zu füllenden Innenraums des Bechers. Von der Bodenfläche 130 des Bodens 16 geht eine umlaufende Umfangswandung 24 aus, die sich im rechten Winkel zur Bodenfläche erstreckt. Der Boden 16 erhält dadurch eine topfartige Form.

Die Betätigungsstange 118 ist mit einer durchgehenden Bohrung 126 versehen. An die Bohrung 126 wird während des Produktionsprozesses zeitweise ein Unterdruck angelegt. Die Durchgangsbohrung 126 mündet in der Stempelfläche 122, so dass nach Anlegen eines Unterdrucks an die Bohrung 126 die Bodenfläche 130 des Bodens 16 gegen die Stempelfläche 122 gezogen wird. Der Boden 16 kann dadurch sicher und ohne die Gefahr, dass er von der Stempelfläche 122 abfällt, in die Hülse 14 eingeschoben werden.

In der Darstellung der Fig. 1 wird der Boden 16 von oben her in die Hülse 14 eingeschoben, also in Richtung auf die kleinere Öffnung der Hülse 14.

Unterhalb des Bodens 16 ist ein Blasteil 128 angeordnet, der dazu vorgesehen ist, warme Luft gegen die Innenseite der Hülse zu blasen, um die Verformung der Hülse und speziell das Umschlagen des unteren Endes der Hülse 14 um die Umfangswand 124 des Bodens 16 zu erleichtern. Aus dem Blasteil 128 strömt radial warme Luft 129 ausströmt, um die Innenseite der Hülse 14 in einem Bereich zu erwärmen, auf dem nachfolgend die Umfangswandung 124 des Bodens 16 zu liegen kommt. Beispielsweise kann eine siegelfähige Beschichtung der Innenseite der Hülse 14 erwärmt werden, um dann ein Ansiegeln der Umfangswand 124 und damit eine flüssigkeitsdichte Verbindung von Umfangswand 124 und Hülse 14 zu ermöglichen.

Die vergrößerte Einzelheit XVII in Fig. 17 lässt zunächst die Stempelfläche 122 erkennen, gegen die die Bodenfläche 130 des Bodens 16 gesaugt wird. Eine Außenseite der Umfangswandung 124 des Bodens 16 ist abschnittsweise von einer ringförmigen Abdeckhülse 132 abgedeckt. Die Abdeckhülse 132 liegt an einer radial außen liegenden Umfangsfläche der Umfangswandung 124 des Bodens 16 an. Wie noch erläutert werden wird, verhindert die Abdeckhülse 132, dass die radial außen liegende Fläche der Umfangswandung 124 in Kontakt mit einer Innenseite 134 der Hülse 14 kommt, bevor eine vordefinierte Relativposition von Boden 16 und Hülse 14 erreicht ist.

Die ringförmige Abdeckhülse 132 ist mit einer kreisringförmigen Befestigungsplatte 136 versehen, deren mittige Bohrung auf den Außendurchmesser der Betätigungsstange 118 abgestimmt ist. Die Befestigungsplatte 136 und die einstückig mit der Befestigungsplatte 136 verbundene ringförmige Abdeckhülse 132 können damit relativ zum Stempel 118 verschoben werden. In dem Zustand der Fig. 16 und der Fig. 17 liegt eine Unterseite der Befestigungsplatte 136 auf einer Oberseite der Stempelplatte 121 an. Mit ihrer Oberseite liegt die Befestigungsplatte 136 an einer Fläche des Dorns 116 an.

Ausgehend von dem Zustand der Fig. 16 bzw. Fig. 17 wird der Stempel 118 zusammen mit dem Boden 16 und der Abdeckhülse 132 nach unten bewegt.

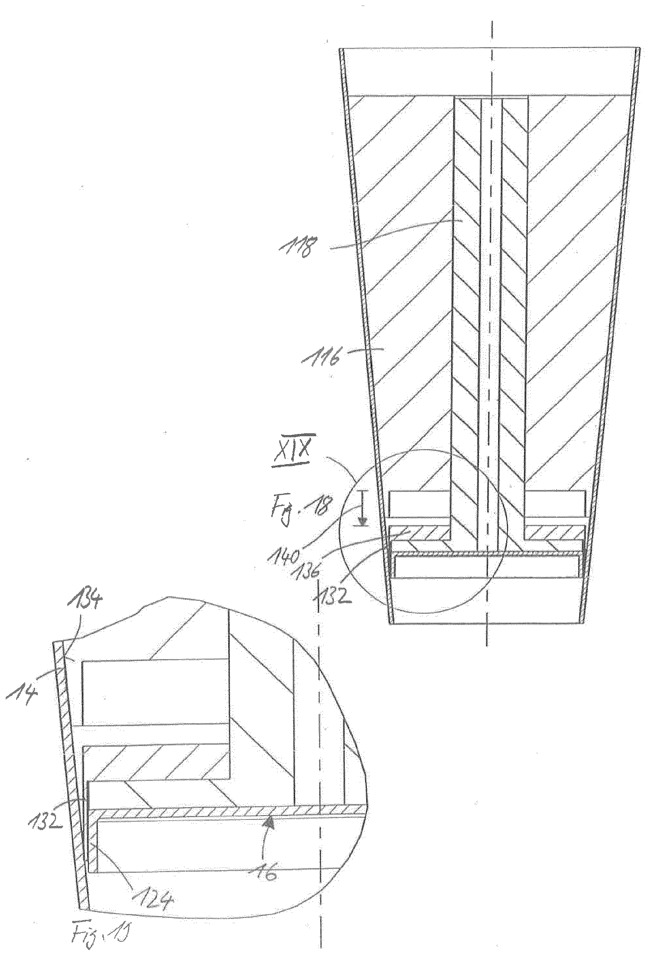

Dieser Zustand ist dann in Fig. 18 dargestellt. Im Zustand der Fig. 18 haben der Boden 16 und die Hülse 14 eine Relativposition zueinander erreicht, die sie auch am fertiggestellten Becher zueinander einnehmen. Mit anderen Worten muss zur Fertigstellung des Bechers der Boden 16 relativ zur Hülse 14 nicht mehr bewegt werden, zumindest nicht in Längsrichtung der Hülse 14.

Es ist in Fig. 18 zu erkennen, dass ausgehend von dem Zustand der Fig. 16 und der Fig. 17 der Stempel 118 um einen Weg nach unten bewegt wurde, der durch den Pfeil 140 in Fig. 18 angedeutet ist. Denn die Oberseite der Befestigungsplatte 136, die mit der ringförmigen Abdeckhülse 132 einstückig verbunden ist, ist nun im Abstand von dem Dorn 116 angeordnet. Hierzu wurde die Betätigungsstange 118 innerhalb der Führungsbohrung des Dorns 116 verschoben, wie beispielsweise auch anhand des oberen Endes der Betätigungsstange 118, siehe Fig. 16 und Fig. 18, zu erkennen ist.

Die vergrößerte Einzelheit XIX aus Fig. 18 ist in Fig. 19 dargestellt und lässt erkennen, dass die ringförmige Abdeckhülse 132 nun einerseits an der Innenseite der Hülse 14 und andererseits an der radial außen liegenden Umfangsfläche der Umfangswandung 124 des Bodens 16 anliegt. Der Innendurchmesser der Abdeckhülse 132 kann dabei so bemessen sein, dass der Boden 16 leicht zusammengedrückt ist, nach Herausziehen der Abdeckhülse 132 also geringfügig auffedert, so dass dann die Umfangswand 124 im Wesentlichen flächig an der Innenseite der Hülse 14 anliegt. Die Umfangswand 124 des Bodens 16 liegt im Zustand der Fig. 19 nicht an der Innenseite der Hülse 14 an, obwohl der Boden 16 und die Hülse 14 in einer Relativposition zueinander angeordnet sind, die sie auch am fertiggestellten Becher zueinander einnehmen.

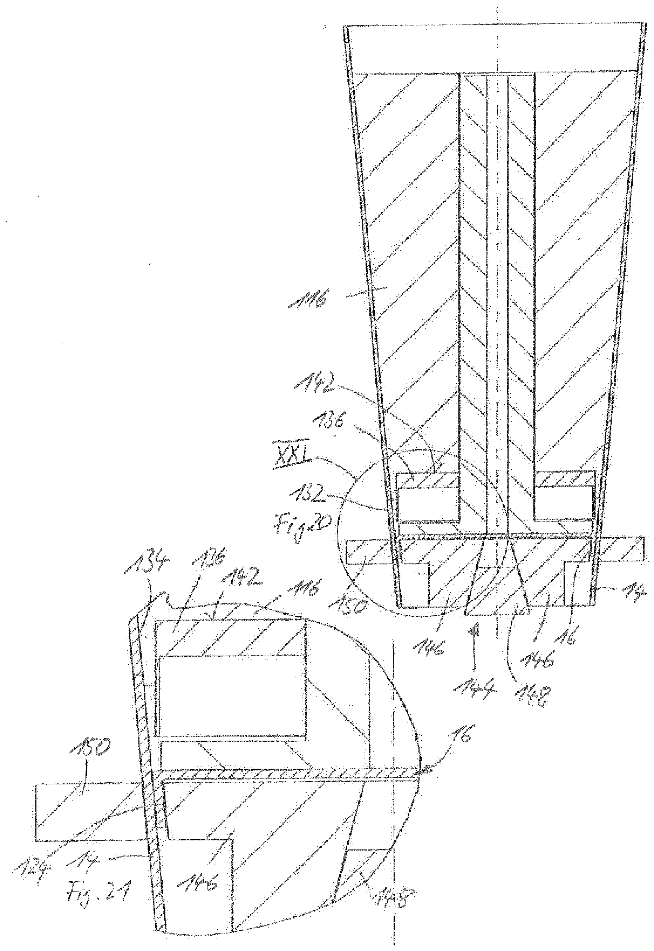

Ausgehend vom Zustand der Fig. 18 und Fig. 19 wird die Abdeckhülse 132 zusammen mit der Befestigungsplatte 136 dann nach oben zwischen der Innenseite 134 der Hülse 14 und der Umfangswand 124 des Bodens 16 herausgezogen. Dieser herausgezogene Zustand ist in Fig. 20 dargestellt. Es ist zu erkennen, dass die Befestigungsplatte 136 nun wieder an der Anschlagfläche 142 am Dorn 116 anliegt. Die Abdeckhülse 132 ist nun vollständig zwischen dem Boden 16 und der Hülse 14 herausgezogen worden und die Umfangswand 124 liegt an der Innenseite 134 der Hülse 14 an. Von unten her ist in die Hülse 14 nun ein mehrteiliger Stempel 144 eingeschoben worden. Dieser Stempel 144 weist mehrere in radialer Richtung bewegliche Pressbacken 146 auf, die von einem mittig angeordneten Betätigungselement 148 radial nach außen gedrückt werden können. An der Außenseite der Hülse 14 liegt im Bereich der Umfangswand 124 des Bodens 16 an einer Außenseite der Hülse 14 ein Haltering 150 an. Dieser Haltering 50 bietet ein Widerlager, wenn die Pressbacken 146 radial nach außen bewegt werden, um die Umfangswand 124 gegen die Innenseite 134 der Hülse 14 zu drücken.

Wesentlich ist, dass zum Verpressen der Umfangswand 124 und der Innenseite der Hülse 14, die ausgehend von dem Zustand der Fig. 20 vorgenommen wird, keine relative Verschiebung mehr zwischen dem Boden 16 und der Hülse 14 erforderlich ist. Es besteht daher nicht die Gefahr, dass zur Positionierung des Bodens 16 in der Hülse 14 Reibungskräfte zwischen einer Oberfläche des Bodens 16 und einer Oberfläche der Hülse 14 überwunden werden müssen.

Die Darstellung der Fig. 21 zeigt die Einzelheit XXI der Fig. 20 in vergrößerter Darstellung. Wie bereits erläutert wurde, liegt die Umfangswandung 24 des Bodens 16 nun flächig an der Innenseite 134 der Hülse 14 an, da die ringförmige Abdeckhülse 132 nach oben zwischen der Umfangswandung 124 und der Innenseite der Hülse 14 herausgezogen wurde. Die Pressbacken 146 und der Haltering 150 sorgen nun für ein Verpressen der Umfangswandung 124 mit der Innenseite 134 der Hülse 14 und dadurch für ein flüssigkeitsdichtes Verbinden des Bodens 16 mit der Hülse 14.

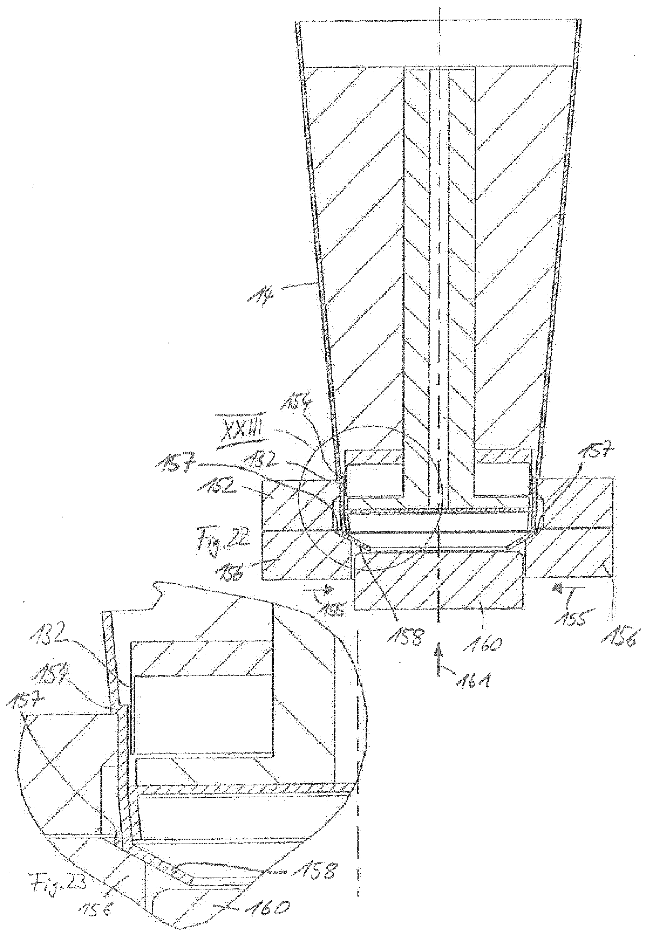

Die Darstellung der Fig. 22 zeigt einen weiteren, auf den Zustand der Fig. 20 bzw. 21 folgenden Verfahrensschritt. Die Pressbacken 146 und der Haltering 150 wurden entfernt. In die Hülse 14 wird nun mittels eines Pressrings 152, der in Fig. 22 von unten her auf die Hülse 14 aufgeschoben wird, eine umlaufende Stapelschulter 154 in die Hülse 14 eingebracht. Diese Stapelschulter 154 dient dazu, mehrere Becher zuverlässig ineinander stapeln zu können. Einen gewissen Gegenhalt beim Aufschieben des Pressrings 152 bietet die ringförmige Abdeckhülse 132, die im Zustand der Fig. 22 radial innerhalb des Pressrings 152 angeordnet ist. Mehrere, gemäß den Pfeilen 155 radial nach innen verschiebbare Backen 156 sorgen dafür, dass der untere Rand 158 der Hülse radial nach innen umgeschlagen wird. Die Backen 156 sind in Fig. 22 und Fig. 23 in ihrer radial inneren Endposition dargestellt. Eine dem Umschlag des unteren Randes 158 der Hülse 14 bewirkende, radial innenliegende Kante der Backe 156 ist mit einer Abschrägung 157 versehen, die bei einer Bewegung der Backen 156 gemäß den Pfeilen 155 auf den unteren Rand 158 der Hülse 14 aufläuft und den Rand 158 um etwa 50° bis 60° nach innen umschlägt. Da alle Backen 156 eine Abschrägung 157 aufweisen, wird der Rand 158 auf seinem gesamten Umfang nach innen umgeschlagen. Ein weiterer Umschlag des Rands 158 um dann annähernd 180° wird durch einen Stempel 160 bewirkt, der ausgehend vom Zustand der Fig. 22 gemäß dem Pfeil 161 nach oben verschoben wird. Das Umschlagen des unteren Randes 158 der Hülse 14 ist erleichtert, da, siehe Fig. 17, die Hülse 14 in diesem Umschlagsbereich zuvor erwärmt wurde.

Die Darstellung der Fig. 23 zeigt die Einzelheit XXIII der Fig. 22 in vergrößerter Darstellung.

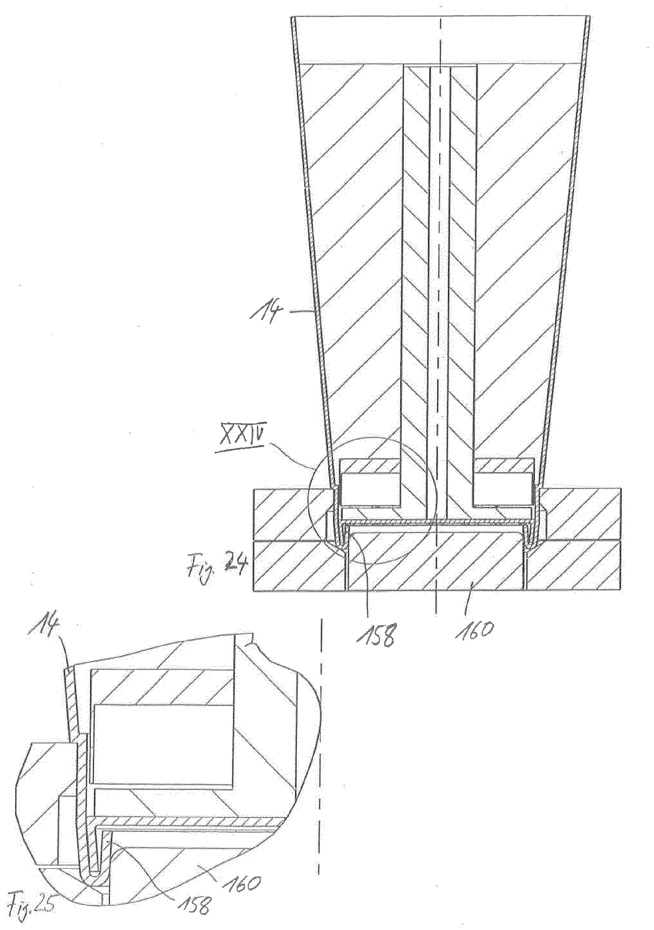

Ausgehend vom Zustand der Fig. 22 wird, wie bereits erläutert wurde, mittels des Stempels 160 der untere Rand 158 der Hülse 14 um annähernd 180° umgeschlagen, siehe Fig. 24.

Fig. 25 zeigt die Einzelheit XXIV der Fig.24 in vergrößerter Darstellung.

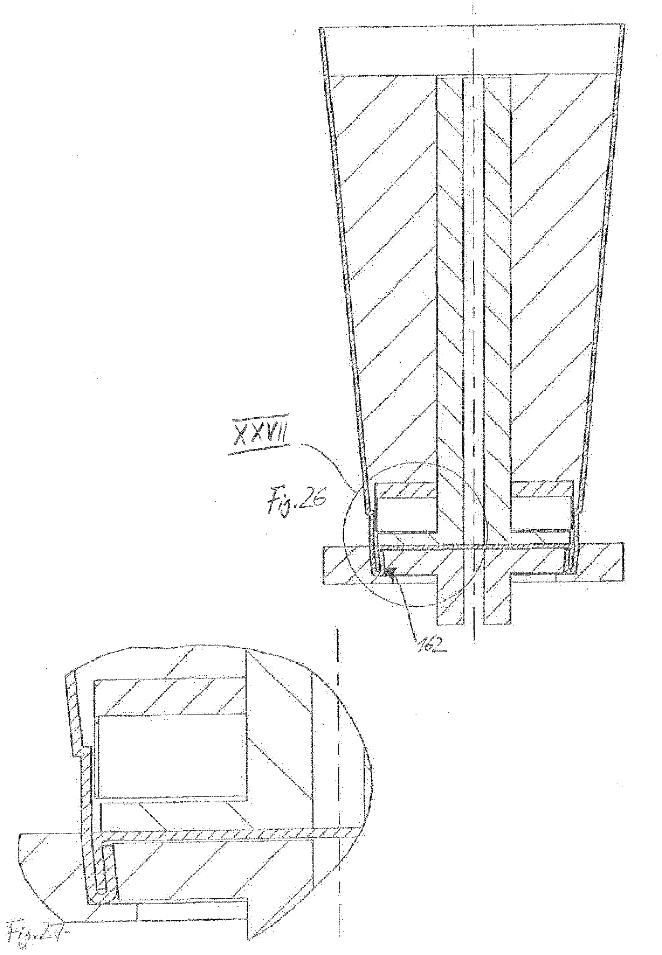

Wie in Fig. 26 gezeigt ist, wird ausgehend vom Zustand der Fig. 24 dann der untere Rand 158 der Hülse 14 radial nach außen gedrückt, um eine sogenannte umlaufende Zarge 162 am unteren Ende der Hülse 14 zu bilden, siehe Fig. 26. Die Zarge 162 bildet dann die Standfläche für einen fertiggestellten Becher.

Die Darstellung der Fig. 27 zeigt die vergrößerte Einzelheit XXVII aus Fig. 26.

Wie vor allem anhand der Fig. 18 bis 21 zu erkennen ist, ermöglicht die ringförmige Abdeckhülse 132, den Boden 16 und die Hülse 14 relativ zueinander so zu positionieren, dass diese bereits die am fertigen Becher vorgesehene Relativposition erreicht haben, ohne dass sich der Boden 16 und die Innenseite der Hülse 14 berühren. Insbesondere berühren sich, siehe Fig. 19, die radial außen liegende Fläche der Umfangswand 124 des Bodens 16 und die Innenseite 134 der Hülse 14 nicht, bis die vordefinierte Relativposition erreicht ist. Ein eventueller hoher Reibungskoeffizient zwischen dem Material bzw. der Oberfläche des Bodens 16 und der Innenseite der Hülse 14 behindert damit den Herstellungsprozess des Bechers nicht. Nachdem die ringförmige Abdeckhülse 132 zwischen der Innenseite der Hülse 14 und dem Boden 16 herausgezogen wurde, kann sich die Umfangswand 124 des Bodens 16 mit ihrer radial außen liegenden Fläche flächig an die Innenseite der Hülse 14 anlegen. Da die Innenseite der Hülse 14 in diesem Bereich zuvor erwärmt wurde, kann unmittelbar ein flüssigkeitsdichtes Verbinden von Boden 16 und Hülse 14 erfolgen. Dies wird durch die sich radial nach außen bewegenden Pressbacken 146 unterstützt.

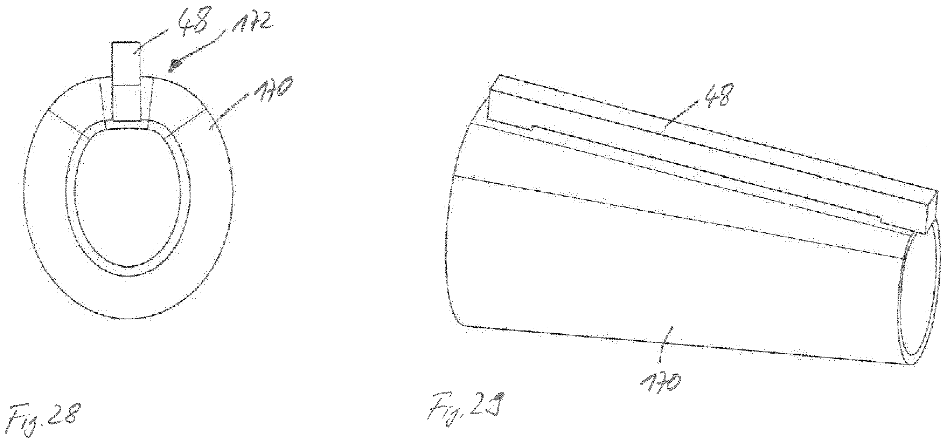

Die Darstellung der Fig. 28 zeigt in einer Vorderansicht einen Wickeldorn 170. Auf dem Wickeldorn ist der Pressstempel 48 angeordnet. Der Wickeldorn weist eine konische, allgemein elliptische Grundform mit einer Abplattung 172 auf. Die Abplattung ist an einer Stelle des allgemein elliptischen Querschnitts angeordnet, in dem an und für sich ein kleinerer Krümmungsradius der Ellipse angeordnet wäre. Im Bereich der Abplattung 172 wird die Überlappung der Segmentkanten angeordnet. Die spezielle Formgebung des Wickeldorns 170 ermöglicht es, das auch bei sehr steifen flächigen Papiermaterialien oder flächigen Kunststoffmaterialen sich nach dem Abziehen der fertig gestellten konischen Hülse eine Hülse mit kreisförmigen Querschnitt ergibt.

Die Fig. 29 zeigt den Wickeldorn 170 in einer Ansicht von schräg oben zusammen mit dem Pressstempel 48.

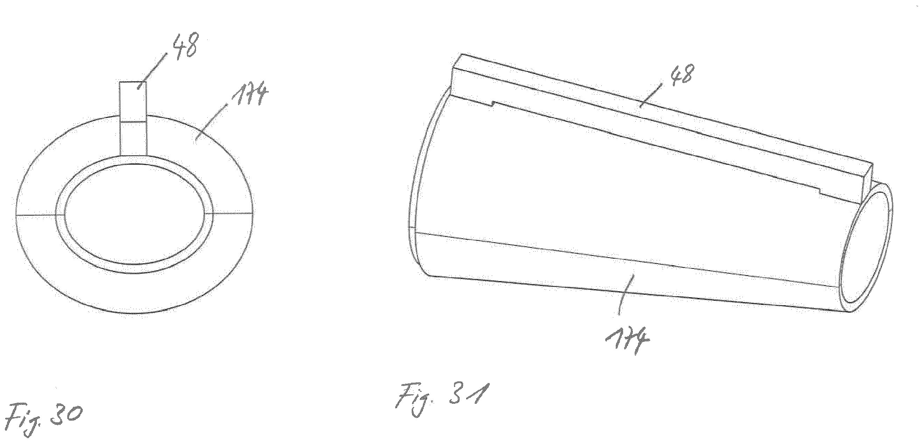

Die Darstellung der Fig. 30 zeigt eine Vorderansicht eines Wickeldorns 174 gemäß einer weiteren Ausführungsform der Erfindung. Der Wickeldorn 174 weist eine elliptische Querschnittsform auf und ist konisch ausgebildet. Auf dem Wickeldorn ist der Presstempel 48 zu erkennen. Der Pressstempel 48 ist in der Mitte eines Bereichs des elliptischen Querschnitts angeordnet, in dem der größere Krümmungsradius der Ellipse vorliegt. Auch auf diese Weise kann erreicht werden, dass beim Wickeln einer Hülse aus steifem Papiermaterial oder steifem Kunststoffmaterial nach dem Abziehen der fertiggestellten Hülse die Hülse eine kreisrunde Form annimmt.

Die Querschnittsform des Wickeldorns 174 kann auch oval ausgebildet sein. Die Querschnittsform wäre dann dadurch gekennzeichnet, dass sie etwa in dem Bereich, in dem der Presstempel 48 angeordnet ist, sowie auch gegenüber, einen ebenen Abschnitt aufweist. Auch mit einem solchen Wickeldorn mit ovalem Querschnitt lässt sich erreichen, dass eine hergestellte Hülse nach dem Abziehen die Form eines Kreiskegelstumpfes aufweist.

Die Darstellung der Fig. 31 zeigt den Wickeldorn 174 mit dem Pressstempel 48 von schräg oben.

## Patentansprüche

1. Verfahren zum Herstellen eines Bechers aus einem flächigen Segment und einem topfförmigen Boden (16) mit den Schritten:
- Wickeln des flächigen Segments auf einen Wickeldorn (40), so dass im Bereich der Seitenkanten des Segments eine Überlappung vorliegt,
- Verbinden der an die Seitenkanten anschließenden Abschnitte im Bereich der Überlappung, so dass einen konische Hülse (14) entsteht,
- Einsetzen des topfförmigen Bodens (16) in die konische Hülse (14) und
- Im Wesentlichen flüssigkeitsdichtes Verbinden einer umlaufenden Wandung des topfförmigen Bodens (16) mit einer Innenseite der Hülse (14), **dadurch gekennzeichnet, dass** das flächige Segment zum Herstellen der konischen Hülse (14) auf einen Wickeldorn (40) aufgewickelt wird, dessen Außenfläche eine um den gesamten Umfang des Wickeldorns (40; 170; 174) laufende Wickelfläche ohne Absatz bildet und dessen Querschnitt von einer Kreisform abweicht und entweder oval oder im Bereich der Überlappung der Segmentkanten abgeplattet ist.

2. Verfahren nach wenigstens einem der vorstehenden Ansprüche, wobei beim Verbinden der an die Seitenkanten anschließenden Abschnitte im Bereich der Überlappung ein Pressdruck ausgeübt wird und wobei der Pressdruck in den Bereichen, die sich unmittelbar an die Unterkante der Hülse und die Oberkante der Hülse anschließen, größer ist als in den übrigen Bereichen der Überlappung.

3. Verfahren nach Anspruch 2, wobei die Länge des Bereichs, der sich unmittelbar an die Unterkante der konischen Hülse (14) anschließt, so groß gewählt wird, dass der Bereich sich am fertiggestellten Becher wenigstens über die Außenseite und Innenseite einer Zarge (18) erstreckt, mit der der Boden (16) und die (14) Hülse im Wesentlichen flüssigkeitsdicht verbunden sind.

4. Verfahren nach Anspruch 2 oder 3, wobei die Länge des Bereichs, der sich unmittelbar an die Oberkante der konischen Hülse (14) anschließt, so groß gewählt wird, dass der Bereich sich am fertiggestellten Becher wenigstens über die Mundrolle (32) erstreckt.

5. Verfahren nach wenigstens einem der Ansprüche 2 bis 4, **dadurch gekennzeichnet, dass** zum Ausüben des Pressdrucks ein Pressstempel (48) verwendet wird, der in einem, auf den Wickeldorn (40) aufgesetzten Zustand im Mittenbereich (54) weiter vom Wickeldorn (40) beabstandet ist als in seinen beiden Endbereichen (50, 52).

6. Verfahren nach wenigstens einem der vorstehenden Ansprüche, mit den Schritten:
Umschlagen eines unteren Randes (158) der Hülse (14), der über die unteren Kante der Umfangswandung des Bodens (16) hinausragt, mittels mehrerer, in radialer Richtung verschiebbarer Backen (156) nach innen bis der untere Rand (158) zur Mittellängsachse der Hülse (14) eine vordefinierte erste Winkelposition einnimmt.

7. Verfahren nach Anspruch 6, wobei ausgehend von der ersten Winkelposition der untere Rand (158) der Hülse (14) mittels eines parallel zur Mittellängsachse der Hülse (14) bewegbaren Stempels (160) in eine zweite vordefinierte Winkelposition umgeschlagen wird.

8. Verfahren nach wenigstens einem der vorstehenden Ansprüche, wobei das Anwärmen des Materials der Hülse (14) im Bereich der Oberkante der Hülse (14) und das anschließende Formen der Mundrolle (32) vorgesehen sind.

9. Verfahren nach Anspruch 8, **dadurch gekennzeichnet, dass** das Auftragen von Gleitmittel im Bereich der Oberkante der Hülse (14) und das anschließende Formen der Mundrolle (32) vorgesehen sind.

10. Vorrichtung zum Herstellen eines Bechers mit einem sich einseitig verjüngendem Wickeldorn (40), **dadurch gekennzeichnet, dass** eine Außenfläche des Wickeldorns (40; 170; 174) eine um den gesamten Umfang des Wickeldorns (40; 170; 174) laufende Wickelfläche ohne Absatz bildet und dass ein Querschnitt des Wickeldorns (40) von einer Kreisform abweicht und entweder oval, elliptisch oder im Bereich der Überlappung der Segmentkanten abgeplattet ist.

11. Vorrichtung zum Herstellen eines Bechers nach Anspruch 10 mit einem Pressstempel (48), wobei der Pressstempel (48) sich entlang einer Mantellinie des Wickeldorns (40) erstreckt, **dadurch gekennzeichnet, dass** der Pressstempel (48) in einem, auf den Wickeldorn aufgesetzten Zustand, in seinem Mittenbereich (54) weiter vom Wickeldorn (40) beabstandet ist als in seinen beiden Endbereichen (50, 52).

## Claims

1. Method for producing a cup from a flat segment and a pot-like base (16), comprising the steps of:
- winding the flat segment onto a winding mandrel (40) so that there is an overlap in the region of the side edges of the segment,
- connecting the sections, which adjoin the side edges, in the region of the overlap, so that a conical sleeve (14) is produced,
- inserting the pot-like base (16) into the conical sleeve (14), and
- connecting a circumferential wall of the pot-like base (16) in an essentially liquid-tight manner to an inner face of the sleeve (14), **characterized in that** the flat segment is wound onto a winding mandrel (40) in order to produce the conical sleeve (14), the exterior surface of the mandrel forming a winding surface extending over the entire circumference of the winding mandrel (40; 170; 174) without a step, and the cross section of the said winding mandrel differing from a circular shape and being either oval or flattened in the region of the overlap of the segment edges.

2. Method according to at least one of the preceding claims, wherein a pressing force is exerted in the region of the overlap when the sections which adjoin the side edges are connected, and wherein the pressing force is greater in those regions which directly adjoin the bottom edge of the sleeve and the top edge of the sleeve than in the other regions of the overlap.

3. Method according to claim 2, wherein the length of the region which directly adjoins the bottom edge of the conical sleeve (14) is selected to be of such a size that the region extends at least over the outer face and inner face of a bottom skirt (18) on the finished cup, the base (16) and the sleeve (14) being connected in a substantially liquid-tight manner to the said bottom skirt.

4. Method according to claim 2 or 3, **characterized in that** the length of that region which directly adjoins the top edge of the conical sleeve (14) is selected to be of such a size that the region extends at least over the top curl (32) on the finished cup.

5. Method according to at least one of the claims 2 to 4, **characterized in that** a pressing die (48) is used in order to exert the pressing force, the said pressing die being at a further distance from the winding mandrel (40) in the centre region (54) than in its two end regions (50, 52) in a state in which it is mounted onto the winding mandrel (40).

6. Method according to at least one of the preceding claims, comprising the steps of: folding over a lower border (158) of the sleeve (14), which lower border projects beyond the lower edge of the circumferential wall of the base (16), by means of a plurality of jaws (156), which can be displaced in the radial direction, inwards until the lower border (158) assumes a predefined first angular position in relation to the centre longitudinal axis of the sleeve (14).

7. Method according to claim 6, wherein, proceeding from the first angular position of the lower border (158), the sleeve (14) is folded over to a second predefined angular position by means of a die (160) which can be moved parallel to the centre longitudinal axis of the sleeve (14).

8. Method according to at least one of the preceding claims, the material of the sleeve (14) in the region of the top edge of the sleeve (14) is heated, and the top curl (32) is then formed.

9. Method according to claim 8, **characterized in that** lubricant is applied in the region of the top edge of the sleeve (14), and the top curl (32) is then formed.

10. Device for producing a cup using a winding mandrel (40) which tapers on one side, **characterized in that** an exterior surface of the mandrel (40; 170; 174) forms a winding surface extending over the entire circumference of the winding mandrel (40; 170; 174) without a step, and **in that** a cross section of the winding mandrel (40) differs from a circular shape and is either oval, elliptical or flattened in the region of the overlap of the segment edges.

11. Device for producing a cup according to claim 10, comprising a pressing die (48), wherein the pressing die (48) extends along a surface line of the winding mandrel (40), **characterized in that** the pressing die (48), in a state in which it is mounted onto the winding mandrel, is at a further distance from the winding mandrel (40) in its centre region (54) than in its two end regions (50, 52).

## Revendications

1. Procédé destiné à la fabrication d'un gobelet à partir s'un segment plat et d'un fond en forme de godet (16), comprenant les étapes suivantes:
- enrouler le segment plat sur un mandrin d'enroulement (40), de telle manière qu'il se trouve un recouvrement dans la région des bords latéraux du segment,
- assembler les parties proches des bords latéraux dans la région du recouvrement, de telle manière qu'il se forme un manchon conique (14),
- insérer le fond en forme de godet (16) dans le manchon conique (14), et
- assembler de façon essentiellement étanche au liquide une paroi périphérique du fond en forme de godet (16) à un côté intérieur du manchon (14), **caractérisé en ce que** l'on enroule le segment plat destiné à la fabrication du manchon conique (14) sur un mandrin d'enroulement (40), dont la surface extérieure forme une face enroulée sans retrait s'étendant sur toute la périphérie du mandrin d'enroulement (40; 170; 174) et dont la section transversale s'écarte d'une forme circulaire et est soit ovale soit aplatie dans la région du recouvrement des bords du segment.

2. Procédé selon au moins une des revendications précédentes, dans lequel on exerce une pression d'application dans la région du recouvrement lors de l'assemblage des parties proches des bords latéraux et dans lequel la pression d'application est plus élevée dans les régions qui se raccordent directement au bord inférieur du manchon et au bord supérieur du manchon que dans les autres régions du recouvrement.

3. Procédé selon la revendication 2, dans lequel on choisit la longueur de la région qui se raccorde directement au bord inférieur du manchon conique (14) avec une grandeur telle que la région s'étende dans le gobelet terminé au moins sur le côté extérieur et le côté intérieur d'un rebord (18), avec lequel le fond (16) et le manchon (14) sont assemblés de façon essentiellement étanche au liquide.

4. Procédé selon la revendication 2 ou 3, dans lequel on choisit la longueur de la région qui se raccorde directement au bord supérieur du manchon conique (14) avec une grandeur telle que la région s'étende dans le gobelet terminé au moins sur le bourrelet buccal (32).

5. Procédé selon au moins une des revendications 2 à 4, **caractérisé en ce que** l'on utilise, pour exercer la pression d'application, un poinçon de presse (48), qui dans un état appliqué sur le mandrin d'enroulement (40) est plus éloigné du mandrin d'enroulement (40) dans la région médiane (54) que dans ses deux régions d'extrémité (50, 52).

6. Procédé selon au moins une des revendications précédentes, comprenant l'étape suivante:
replier un bord inférieur (158) du manchon (14), qui dépasse le bord inférieur de la paroi périphérique du fond (16), au moyen de plusieurs mâchoires (156) déplaçables en direction radiale vers l'intérieur jusqu'à ce que le bord inférieur (158) occupe par rapport à l'axe longitudinal central du manchon (14) une première position angulaire prédéfinie.

7. Procédé selon la revendication 6, dans lequel, en partant de la première position angulaire, on replie le bord inférieur (158) du manchon (14) au moyen d'un poinçon (160) déplaçable parallèlement à l'axe longitudinal central du manchon (14) dans une deuxième position angulaire prédéfinie.

8. Procédé selon au moins une des revendications précédentes, dans lequel on prévoit le chauffage du matériau du manchon (14) dans la région du bord supérieur du manchon (14) et le formage consécutif du bourrelet buccal (32).

9. Procédé selon la revendication 8, **caractérisé en ce que** l'on prévoit le dépôt de lubrifiant dans la région du bord supérieur de la douille (14) et le formage ultérieur du bourrelet buccal (32).

10. Dispositif destiné à la fabrication d'un gobelet avec un mandrin d'enroulement (40) décroissant vers un côté, **caractérisé en ce qu'**une surface extérieure du mandrin d'enroulement (40; 170; 174) forme une surface d'enroulement sans retrait s'étendant sur toute la périphérie du mandrin d'enroulement (40; 170; 174) et **en ce qu'**une section transversale du mandrin d'enroulement (40) s'écarte d'une forme circulaire et est ovale, elliptique ou de forme aplatie dans la région du recouvrement des bords du segment.

11. Dispositif destiné à la fabrication d'un gobelet selon la revendication 10, avec un poinçon de presse (48), dans lequel le poinçon de presse (48) s'étend le long d'une génératrice du mandrin d'enroulement (40), **caractérisé en ce que** le poinçon de presse (48), dans un état appliqué sur le mandrin d'enroulement, est plus espacé du mandrin d'enroulement (40) dans sa région médiane (54) que dans ses deux régions d'extrémité (50, 52).
